# EUROPÄISCHE PATENTANMELDUNG

(11) **EP 4 481 120 A1**
(43) Veröffentlichungstag der Anmeldung: **25.12.2024**
(21) Anmeldenummer: 23180288.5
(22) Anmeldetag: 20.06.2023
(51) Int. Cl.: E02D 3/074, E01C 19/38, H02K 7/116, H02K 29/00

(54) **RÜTTELPLATTE ZUM VERDICHTEN VON ERDE, BODEN ODER UNTERGRUND, SOWIE VERFAHREN ZU DEREN BETRIEB UND SYSTEM**

(71) Anmelder: Hilti Aktiengesellschaft, 9494 Schaan (LI)
(72) Erfinder: Behringer, Uwe, 87616 Marktoberdorf (DE)
(74) Vertreter: Hilti Aktiengesellschaft Corporate Intellectual Property

(57) **Zusammenfassung**

Die vorliegende Anmeldung betrifft eine Rüttelplatte zum Verdichten von Erde, Boden oder Untergrund, beispielsweise auf einer Baustelle, wobei die Rüttelplatte einen Elektromotor (14) aufweist, wobei der Elektromotor (14) in einem Drehzahlbereich von mehr als 12.000 Umdrehungen pro Minute betrieben werden kann. In einem zweiten Aspekt betrifft die Anmeldung ein Verfahren zum Betrieb einer solchen Rüttelplatte, sowie ein System, das eine solche Rüttelplatte und eine akkubetriebene Werkzeugmaschine umfasst. Dabei können sowohl die Rüttelplatte, als auch die Werkzeugmaschine mit demselben Typ Energieversorgungsvorrichtung mit elektrischer Energie versorgt werden. Dadurch kann die Versorgung von unterschiedlichen Geräten auf einer Baustelle mit elektrischer Energie vereinfacht werden, sowie eine Rüttelplatte mit kompakter Antriebseinheit und geringem Transportmaß bereitgestellt werden, bei der das Kompaktierungsergebnis durch eine geschickte Anordnung der Komponenten verbessert und der Vortrieb schneller gemacht werden kann.

## Beschreibung

Die vorliegende Erfindung betrifft eine Rüttelplatte zum Verdichten von Erde, Boden oder Untergrund, beispielsweise auf einer Baustelle, wobei die Rüttelplatte einen Elektromotor aufweist, wobei der Elektromotor in einem Drehzahlbereich von mehr als 12.000 Umdrehungen pro Minute betrieben werden kann. In einem zweiten Aspekt betrifft die Erfindung ein Verfahren zum Betrieb einer solchen Rüttelplatte, sowie ein System, das eine solche Rüttelplatte und eine akkubetriebene Werkzeugmaschine umfasst. Dabei können sowohl die Rüttelplatte, als auch die Werkzeugmaschine mit demselben Typ Energieversorgungsvorrichtung mit elektrischer Energie versorgt werden. Mit der Erfindung kann die Versorgung von unterschiedlichen Geräten auf einer Baustelle mit elektrischer Energie vereinfacht werden, sowie eine Rüttelplatte mit kompakter Antriebseinheit und geringem Transportmaß bereitgestellt werden, bei der das Kompaktierungsergebnis durch eine geschickte Anordnung der Komponenten verbessert und der Vortrieb schneller gemacht werden kann.

### Hintergrund der Erfindung:

Im Stand der Technik sind zur Verdichtung von Erde, Boden oder Untergrund, beispielsweise auf einer Baustelle, Bodenverdichtungsvorrichtungen und Rüttelplatten bekannt. Diese Bodenverdichtungsvorrichtungen oder Rüttelplatten weisen üblicherweise eine Bodenplatte auf, die zu Vibrationen oder Rüttelbewegungen angeregt wird, um Erde, Boden oder Untergrund zu verdichten. Die Vibrationen oder Rüttelbewegungen werden zumeist dadurch erzeugt, dass ein Motor eine Welle mit einer exzentrischen Masse antreibt, wobei diese Bewegung der Welle direkt oder indirekt, beispielsweise über einen Riemenantrieb, auf die Bodenplatte übertragen wird. Gesteuert werden die Bodenverdichtungsvorrichtungen oder Rüttelplatten in der Regel mit Hilfe einer Steuer-Elektronik, die mit dem Motor und/oder der Energieversorgungsvorrichtung verbunden vorliegen kann.

Für Bodenverdichtungsvorrichtungen und Rüttelplatten sind im Stand der Technik unterschiedliche Antriebsvarianten bekannt. Weit verbreitet sind beispielsweise Geräte mit Verbrennungsmotoren. Darüber hinaus sind Bodenverdichtungsvorrichtungen und Rüttelplatten mit Elektromotoren bekannt, die über einen Netzanschluss oder mit Hilfe von Energieversorgungsvorrichtungen, wie Batterien oder Akkumulatoren ("Akkus"), mit elektrischer Energie versorgt werden. Aufgrund des großen Gewichts, den die Bodenplatten der Bodenverdichtungsvorrichtungen oder Rüttelplatten üblicherweise aufweisen, sind hohe elektrische Leistungen erforderlich, um die Bodenplatte in Schwingung zu versetzen. Eine solche Leistung zum Antrieb einer Bodenplatte einer Bodenverdichtungsvorrichtung oder einer Rüttelplatte kann beispielweise in einem Bereich zwischen 1.000 und 3.000 Watt liegen (1-3 kW). Um diesem Leistungsbedarf gerecht zu werden, werden oftmals Energieversorgungsvorrichtungen mit vergleichsweise großen Kapazitäten eingesetzt. Dadurch sind solche Energieversorgungsvorrichtungen, wie sie in konventionellen Bodenverdichtungsvorrichtungen und Rüttelplatten eingesetzt werden, nachteiligerweise häufig nicht kompatibel mit Werkzeugmaschinen, wie Akkuschrauber, Bohrhämmer, Kernbohrgeräten oder Winkelschleifer, ohne darauf beschränkt zu sein. Das bedeutet, dass auf einer Baustelle mehrere unterschiedliche Typen von Energieversorgungsvorrichtungen vorgehalten werden müssen, um einerseits Werkzeugmaschinen, die auf einer Baustelle verwendet werden, und andererseits Bodenverdichtungsvorrichtungen oder Rüttelplatten zu betreiben.

Ein Anliegen der Erfindung besteht somit darin, die Energieversorgung von unterschiedlichen Geräten, die auf einer Baustelle verwendet werden, zu vereinfachen.

Um die Bodenplatte der Bodenverdichtungsvorrichtungen oder Rüttelplatten anzutreiben, werden häufig Motoren mit großem Bauraum verwendet, die üblicherweise eine Drehzahl in einem Bereich zwischen 3.000 und 6.000 Umdrehungen pro Minute (rounds per minute, rpm) aufweisen. Darüber hinaus weisen die "großen" Motoren häufig ein großes Gewicht und ein großes Volumen auf. Der Motor, die Energieversorgung, die Steuer-Elektronik und die Übertragungseinheit zur Übertragung der Bewegung auf die Bodenplatte bilden häufig eine Antriebseinheit einer Bodenverdichtungsvorrichtung oder einer Rüttelplatte. Die Größe dieser Antriebseinheit bestimmt maßgeblich das Transportmaß und die Unterfahrhöhe der Bodenverdichtungsvorrichtung bzw. der Rüttelplatte. Durch das große Volumen und das große Gewicht der Motoren, die üblicherweise in Bodenverdichtungsvorrichtungen und Rüttelplatten eingesetzt werden, ergibt sich häufig auch eine große, voluminöse und schwere Antriebseinheit für die Bodenverdichtungsvorrichtung bzw. die Rüttelplatte.

Ein weiteres Anliegen der Erfindung besteht somit darin, eine Bodenverdichtungsvorrichtung oder Rüttelplatte bereitzustellen, die eine vergleichsweise leichte und kompakte, d.h. raumsparende Antriebseinheit aufweist.

Aufgrund der Unhandlichkeit und des großen Volumens und des großen Gewichts der Antriebseinheiten von konventionellen Bodenverdichtungsvorrichtungen und Rüttelplatten ist bei deren Entwicklung häufig wenig Spielraum, um die Verteilung des Gewichts der einzelnen Komponenten der Bodenverdichtungsvorrichtung bzw. Rüttelplatte in Richtung eines verbesserten Kompaktierungsergebnisses zu optimieren. Mit anderen Worten ergibt sich häufig eine starre vorgegeben Anordnung der Komponenten, um überhaupt alle erforderlichen Komponenten des Geräts auf der Bodenplatte anordnen zu können.

Ein weiteres Anliegen der Erfindung besteht somit darin, eine Bodenverdichtungsvorrichtung oder Rüttelplatte bereitzustellen, bei der das Kompaktierungsergebnis durch eine geschickte Anordnung der Komponenten der Bodenverdichtungsvorrichtung bzw. der Rüttelplatte optimiert werden kann. Darüber hinaus würde es die Fachwelt begrüßen, wenn mit der bereitzustellenden Anordnung auch ein schnellerer Vortrieb der Bodenverdichtungsvorrichtung bzw. der Rüttelplatte ermöglicht werden könnte.

Solche Rüttelplatten oder Bodenverdichtungsvorrichtungen werden beispielsweise in der US 9 580 879 B1, US 2019 078 282 A1, WO 2022 184 666 A1, WO 2022 184 668 A1, WO 2022 184 697 A1, WO 2023 009 800 A1 oder WO 2023 009 812 A1 beschrieben.

Die Aufgabe, die der vorliegenden Erfindung zugrunde liegt, besteht darin, die vorstehend beschriebenen Mängel und Nachteile des Standes der Technik zu überwinden und eine Bodenverdichtungsvorrichtung bzw. Rüttelplatte mit einer vereinfachten Energieversorgung bereitzustellen, wobei die Bodenverdichtungsvorrichtung bzw. die Rüttelplatte eine vergleichsweise leichte und kompakte Antriebseinheit aufweisen soll und bei der das Kompaktierungsergebnis optimiert und der Vortrieb verbessert werden soll.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Rüttelplatte zum Verdichten von Erde, Boden oder Untergrund, beispielsweise auf einer Baustelle, vorgesehen. Die Rüttelplatte weist einen Elektromotor auf, wobei der Elektromotor in einem Drehzahlbereich von mehr als 12.000 Umdrehungen pro Minute betrieben werden kann. Ein solcher Motor wird im Sinne der Erfindung bevorzugt als «schnelldrehender Elektromotor" bezeichnet. Mit der Erfindung kann insbesondere ein geringes Transportmaß und eine größerer Optimierungsspielraum bei der Gewichtsverteilung der Rüttelplatte ermöglicht werden und eine Rüttelplatte mit einer kleinen, kompakten Antriebseinheit bereitgestellt werden. Denn durch die Verwendung eines Elektromotors, der mit einer Drehzahl von mehr als 12.000 Umdrehungen pro Minute (rounds per minutes, rpm) betrieben wird, kann ein besonders handlicher und kompakter Elektromotor in der vorgeschlagenen Rüttelplatte verwendet werden. dadurch kann das geringe Transportmaß und der Optimierungsspielraum bei der Gewichtsverteilung der Komponenten der Rüttelplatte erreicht werden.

Es ist im Sinne der Erfindung bevorzugt, dass die Rüttelplatte eine Antriebseinheit aufweist, wobei die Antriebseinheit den Elektromotor und eine Steuer-Elektronik umfasst und zur Versorgung mit elektrischer Energie mit einer Energieversorgungseinheit verbindbar ist, wobei die Steuer-Elektronik und/oder die Energieversorgungseinheit innerhalb der Antriebseinheit hinter dem Elektromotor angeordnet vorliegen. Die Steuer-Elektronik und die Energieversorgungseinheit können eine Einheit bilden, wobei die Einheit aus Steuer-Elektronik und die Energieversorgungseinheit vorzugsweise hinter dem Elektromotor, d.h. in einem hinteren Bereich der Antriebseinheit angeordnet ist. Die Energieversorgungseinheit kann mindestens einen Einzelackumulator umfassen; bevorzugt ist es allerdings, dass die Energieversorgungseinheit zwei Einzelakkumulatoren umfasst.

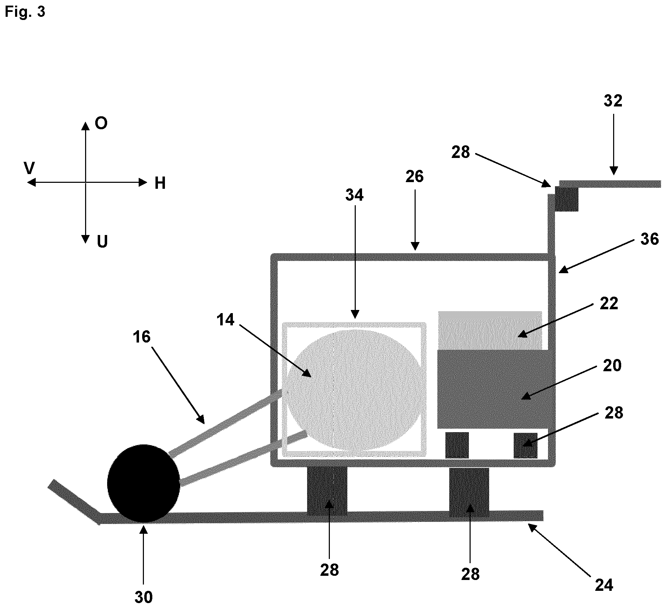

Es ist im Sinne der Erfindung bevorzugt, dass bei der vorgeschlagenen Rüttelplatte eine besonders kompakte Antriebseinheit bereitgestellt werden kann, bei der die mindestens eine Energieversorgungsvorrichtung nicht auf einer Oberseite des Motors, sondern hinter dem Motor der Rüttelplatte angeordnet ist. Eine solche Ausgestaltung der Erfindung ist beispielsweise in Figur 3 dargestellt. Es ist im Sinne der Erfindung bevorzugt, dass die mindestens eine Energieversorgungsvorrichtung in einem hinteren, unteren Bereich der Antriebseinheit angeordnet ist. Das bedeutet im Sinne der Erfindung bevorzugt, dass die schweren Komponenten der Rüttelplatte, wie Motor und Energieversorgungsvorrichtungen, in einem unteren Bereich der Antriebseinheit vorgesehen sind, d.h. in räumlicher Nähe zu der Bodenplatte. Dadurch kann die Antriebseinheit besonders kompakt ausgebildet sein. Insbesondere kann eine Antriebseinheit mit einer besonders geringen Höhe bereitgestellt werden, so dass mit der vorgeschlagenen Rüttelplatte eine überraschend geringe Unterfahrhöhe der Antriebseinheit bzw. der Rüttelplatte ermöglicht wird. Darüber hinaus kann der Schwerpunkt der Rüttelplatte im Vergleich zu herkömmlichen Rüttelplatten, wie sie aus dem Stand der Technik bekannt sind, nach unten verschoben werden, d.h. in eine Raumrichtung nach unten bzw. in Richtung des zu bearbeitenden Untergrunds. Durch diesen tiefen Schwerpunkt der Rüttelplatte bzw. der Antriebseinheit kann eine gute Handhabung der Rüttelplatte für den Nutzer ermöglicht werden. Darüber hinaus haben Tests gezeigt, dass das Kompaktierungsergebnis der Rüttelplatte durch die Verschiebung des Schwerpunkts der Rüttelplatte in eine Raumrichtung "nach unten" verbessert werden kann.

Es ist im Sinne der Erfindung bevorzugt, dass bei der vorgeschlagenen Rüttelplatte die Antriebseinheit einen Motor, eine Elektronik und mindestens eine Energieversorgungsvorrichtung aufweist, wobei der Motor in einem vorderen unteren Bereich der Antriebseinheit und damit vor der Elektronik und/oder der Energieversorgungsvorrichtung angeordnet vorliegt, während die Elektronik und der mindestens eine Energieversorgungsvorrichtung hinter dem Motor, d.h. in einem hinteren Bereich der Antriebseinheit vorgesehen sein können. Die Steuer-Elektronik kann vorzugsweise auf einer Oberseite der mindestens einen Energieversorgungsvorrichtung angeordnet vorliegen, d.h. oberhalb der der mindestens einen Energieversorgungsvorrichtung. Dementsprechend kann die mindestens eine Energieversorgungsvorrichtung unterhalb bzw. auf einer Unterseite der Steuer-Elektronik angeordnet vorliegen. Es ist im Sinne der Erfindung bevorzugt, dass der Motor, die Steuer-Elektronik und die mindestens eine Energieversorgungsvorrichtung als "Komponenten der Antriebseinheit" bezeichnet werden. Die Anordnung der Komponenten der Antriebseinheit, wie in Figur 3 dargestellt, mit dem Motor vor der Batterie und der Steuer-Elektronik oberhalb der Batterie, wird im Sinne der Erfindung bevorzugt als "horizontale Anordnung der Komponenten der Antriebseinheit" bezeichnet. Es ist im Sinne der Erfindung bevorzugt, dass die Komponenten der Antriebseinheit untereinander mit Leitungen für Daten, Signale und/oder elektrischer Energie verbunden sind. Vorzugsweise können einzelne Bereiche dieser Verbindungen kabellos ausgebildet sein.

Selbstverständlich können statt der mindestens einen Energieversorgungsvorrichtung zwei oder mehr Energieversorgungsvorrichtungen in der Antriebseinheit vorgesehen sein. In diesem Fall können die zwei oder mehr Energieversorgungsvorrichtungen hinter dem Motor angeordnet vorliegen, beispielsweise nebeneinander oder übereinander. Es ist im Sinne der Erfindung bevorzugt, dass die mindestens eine Energieversorgungsvorrichtung in einer Raumrichtung von hinten oder seitlich in die Antriebseinheit der Rüttelplatte eingeführt werden kann, um die Rüttelplatte mit elektrischer Energie zu versorgen. Bei der Einschubrichtung "von hinten" können die Energieversorgungsvorrichtungen sehr gut gegen Schmutz, Feuchtigkeit oder Schmutzwasser geschützt werden, bei der seitlichen Einschubrichtung ist eine besonders gute Zugänglichkeit der Aufnahmebereiche für die Energieversorgungsvorrichtungen gewährleistet. Durch die bevorzugt "horizontale Anordnung" der Komponenten der Antriebseinheit kann eine besonders kompakte Antriebseinheit bzw. Rüttelplatte mit einer geringen Unterfahrhöhe bereitgestellt werden, wobei durch den eingesparten Raum eine Reihe von verbesserten Anordnungsmöglichkeit der Komponenten der Rüttelplatte ermöglicht werden, die insbesondere auch Leistungs- oder Betriebsparameter verbessern können.

Es kann im Sinne der Erfindung auch bevorzugt sein, dass die Energieversorgungsvorrichtungen in einer Raumrichtung "von oben" in die Antriebseinheit der Rüttelplatte eingeführt wird. Dabei kann die Energieversorgungsvorrichtung beispielsweise so in die Antriebseinheit der Rüttelplatte eingeführt werden, dass die Einschubrichtung der Energieversorgungsvorrichtung und eine Boden- oder Untergrundebene, auf der die Rüttelplatte steht bzw. die von der Rüttelplatte bearbeitet wird, einen im Wesentlichen rechten Winkel von 90 ° einschließen. Mit anderen Worten können die Einschubrichtung und eine Boden- oder Untergrundebene der Rüttelplatte im Wesentlichen senkrecht aufeinander stehen. Es kann im Sinne der Erfindung auch bevorzugt sein, dass die mindestens eine Energieversorgungsvorrichtung schräg in die Antriebseinheit der Rüttelplatte eingeführt wird. Beispielsweise kann die mindestens eine Energieversorgungsvorrichtung schräg in einer Raumrichtung "von oben" in die Antriebseinheit der Rüttelplatte eingeführt werden. In diesem Fall kann die Einschubrichtung der mindestens einen Energieversorgungsvorrichtung mit der Boden- oder Untergrundebene der Rüttelplatte einen Winkel a einschließen, wobei der Winkel a zwischen 0 und 180 ° liegen kann. Je nach Messweise können Winkel in einem Bereich zwischen 45 und 135 ° zwischen der Einschubrichtung und der Boden- oder Untergrundebene bevorzugt sein. Ein Winkel b, der sich zwischen der Einschubrichtung der Batterie und einer Senkrechten auf der Boden- oder Untergrundebene ausbildet, liegt dann vorzugsweise bei +/- 45 °. Analog dazu kann die mindestens eine Energieversorgungsvorrichtung schräg einer Raumrichtung "von hinten" oder seitlich in die Antriebseinheit der Rüttelplatte eingeführt werden.

Ein weiterer Vorteil der Erfindung besteht darin, dass eine Bodenverdichtungsvorrichtung oder Rüttelplatte mit einem Motor betrieben werden kann, wobei der Motor Drehzahlen in einem Bereich aufweist, die für Werkzeugmaschinen, wie sie auf Baustellen verwendet werden, üblich sind. Solchen Drehzahlen können beispielsweise in einem Bereich zwischen 15.000 und 20.000 Umdrehungen pro Minute liegen. Dadurch können handelsübliche Motoren in der Rüttelplatte eingebaut werden, die in großer Zahl und zu günstigen Preisen im Markt angeboten werden. Auf diese Weise kann eine besonders kostengünstige Rüttelplatte bereitgestellt werden. Darüber hinaus kann die Wartung und Reparatur der Motoren der vorgeschlagenen Rüttelplatte deutlich vereinfacht werden, sowie die Beschaffung von Ersatzteilen. Es ist im Sinne der Erfindung bevorzugt, dass Elektromotoren mit Drehzahlen von mehr als 12.000 rpm als «Hochdrehzahl-Motoren» bezeichnet werden. Es ist im Sinne der Erfindung ganz besonders bevorzugt, dass der Elektromotor ein bürstenloser Gleichstrom-Motor ist.

Darüber hinaus kann die vorgeschlagene Rüttelplatte zu einem günstigen Preis angeboten werden, da im Vergleich zu konventionellen Bodenverdichtungsvorrichtungen bzw. Rüttelplatten mehr kostengünstige Standardbauteile eingebaut werden können. Dies betrifft insbesondere den Elektromotor, da als Elektromotor ein handelsüblicher Elektromotor für eine Werkzeugmaschine verwendet werden kann. Es war vollkommen überraschend, dass für den Betrieb einer Rüttelplatte handelsübliche Elektromotoren für eine Werkzeugmaschinen verwendet werden können. Die Fachwelt war bisher stets davon ausgegangen, dass für den Betrieb einer Rüttelplatte besonders langsamdrehende Elektromotoren mit Drehzahlen in einem Drehzahlbereich zwischen 3.000 und 6.000 rpm verwendet werden müssen. Durch die Verwendung eines vergleichsweise kleinen Werkzeugmaschinenmotors mit einer vergleichsweise hohen Drehzahl in einem Bereich von mehr als 12.000 rpm kann eine Bodenverdichtungsvorrichtung oder Rüttelplatte mit einer vergleichsweise leichten und kompakten Antriebseinheit bereitgestellt werden kann. Darüber hinaus erfüllen schnelldrehende Motoren, wie sie im Kontext der vorliegenden Erfindung Verwendung finden, besonders gut die Robustheitsanforderungen, die sich aus einem Einsatz der Rüttelplatte auf einer anspruchsvollen Umgebung, wie einer Baustelle, ergeben.

Ein weiterer Vorteil der Erfindung besteht darin, dass eine Bodenverdichtungsvorrichtung oder Rüttelplatte mit einem verbesserten Kompaktierungsergebnis und einem schnelleren Vortrieb bereitgestellt werden kann. Diese Vorteile werden insbesondere durch die Verwendung eines schnelldrehenden Elektromotors, sowie die geschickte Anordnung der Komponenten innerhalb der Antriebseinheit der Rüttelplatte erreicht. Die Rüttelplatte stellt vorzugsweise ein komplexes Mehrkörpersystem mit federnd gekoppelten Massen dar, das im Kontext der vorliegenden Erfindung dergestalt optimiert wurde, dass beispielsweise besonders gute Kompaktierungsergebnisse erreicht werden können.

Es ist im Sinne der Erfindung bevorzugt, dass die Rüttelplatte ein Stirnradgetriebe aufweist, wobei das Stirnradgetriebe in einem Leistungsstrang der Rüttelplatte auf den Elektromotor folgend vorgesehen ist. Das bedeutet im Sinne der Erfindung bevorzugt, dass das Stirnradgetriebe auf einer Abtriebsseite des Antriebsstrangs angeordnet vorliegt. Beispielsweise kann eine Reihenfolge von Komponenten im Antriebsstrang wie folgt lauten:
Elektromotor - Stirnradgetriebe - Exzenterwelle - Bodenplatte.

Vorzugsweise kann eine Drehbewegung des Elektromotors mit Hilfe des Stirnradgetriebes und/oder der Exzenterwelle in eine Oszillations- oder Vibrationsbewegung der Bodenplatte der Rüttelplatte umgewandelt werden. Durch diese Oszillations- oder Vibrationsbewegung der Bodenplatte kann der Boden unterhalb der Bodenplatte der Rüttelplatte verdichtet werden.

Durch die Verwendung eines Stirnradgetriebes kann der Einsatz eines schnelldrehenden Elektromotors mit einer Drehzahl in einem einem Bereich von mehr als 12.000 rpm ermöglicht und eine besonders gute Integration in den Antriebsstrang der Rüttelplatte sichergestellt werden. Denn der schnelldrehende Elektromotor, der im Kontext der vorliegenden Erfindung in der Rüttelplatte verwendet wird, kann bei gleicher Leistung besonders kompakt ausgebildet sein bzw. ein geringes Volumen aufweisen. Insbesondere kann ein schnelldrehender Motor mit Getriebe bei gleicher Leistung deutlich kleiner als ein langsamdrehender Motor ausgebildet sein. Die langsamdrehenden Motoren werden insbesondere bei benzinbetriebenen Rüttelplatten eingesetzt, wie sie aus dem Stand der Technik bekannt sind. Mit der Kombination aus schnelldrehendem Elektromotor und Stirnradgetriebe kann mit der vorgeschlagenen Erfindung ein effizienter leistungsstarker Antrieb für eine Rüttelmaschine bereitgestellt werden, der die Nachteile des Standes der Technik überwindet, eine kompakte Antriebseinheit aufweist und für die kabellose Arbeit auf einer Baustelle optimiert ist.

Es ist im Sinne der Erfindung bevorzugt, dass das Stirnradgetriebe einstufig ausgebildet ist. Vorzugsweise kann das Stirnradgetriebe eine Übersetzung in einem Bereich zwischen 2,5 und 6 aufweisen. Vorzugsweise wird die Exzenterwelle im Antriebsstrang der Rüttelplatte mit einer Drehfrequenz in einem Bereich zwischen 90 bis 100 Hz betrieben. Um diese Drehfrequenz zu erreichen, wird im Sinne der Erfindung bevorzugt mit einer Übersetzung in einem Bereich zwischen 2,5 und 6 gearbeitet.

Es ist im Sinne der Erfindung bevorzugt, dass die Rüttelplatte zur Energieversorgung mit mindestens einer Energieversorgungsvorrichtung verbindbar ist. Es ist im Sinne der Erfindung ganz besonders bevorzugt, dass die Rüttelplatte zur Energieversorgung mit zwei Energieversorgungsvorrichtungen verbindbar ist. Mit anderen Worten kann die vorgeschlagene Rüttelplatte mit zwei Energieversorgungsvorrichtungen oder Batterien bzw. Akkumulatoren («Akkus») verbunden werden, um mit elektrischer Energie versorgt zu werden. Vorzugsweise sind die Energieversorgungsvorrichtungen der Rüttelplatte in Reihe geschaltet.

Durch die Reihenschaltung der zwei Akkus kann die Spannung eines Einzelakkus vorteilhafterweise verdoppelt werden. Dadurch kann das Erreichen der gewünschten Drehzahl für den Betrieb der Rüttelplatte erheblich erleichtert werden. Darüber hinaus können durch die bevorzugte Reihenschaltung der zwei Akkus die elektrischen Ströme, die innerhalb der Rüttelplatte fließen, deutlich reduziert werden, so dass dünnere Leitungen verwendet werden können. Dadurch können vorteilhafterweise der Verkabelungsaufwand und der Ressourcenaufwand bei der Herstellung der Rüttelplatte reduziert werden. Es ist im Sinne der Erfindung bevorzugt, dass die zwei Energieversorgungsvorrichtungen der Rüttelplatte zusammen eine Spannung von im Wesentlichen 44 V aufweisen, dies insbesondere dann, wenn die zwei Akkus in Reihe geschaltet sind. Insbesondere können durch die Reihenschaltung zwei kleine, kompakte Energieversorgungsvorrichtungen innerhalb der Rüttelplatte verwendet werden, mit denen die Verwendung eines großen Akkus, wie sie häufig bei konventionellen Rüttelplatten aus dem Stand der Technik verwendet werden, kompensiert werden. Die Verwendung von zwei Akkus ermöglicht darüber hinaus eine flexiblere Anordnung der Akkus innerhalb der Antriebseinheit der vorgeschlagenen Rüttelplatte.

Es ist im Sinne der Erfindung bevorzugt, dass die Energieversorgungsvorrichtungen, die in der Rüttelplatte verwendet werden, auch in mindestens einer Werkzeugmaschine verwendbar sind. Dadurch kann vorteilhafterweise ein System aus einer akkubetriebenen Rüttelplatte und einer akkubetriebenen Werkzeugmaschine bereitgestellt werden, wobei Rüttelplatte und Werkzeugmaschine mit ein und demselben Typ Batterie betrieben werden kann. Mit anderen Worten betrifft die Erfindung ein System, das aus einer akkubetriebenen Rüttelplatte und einer akkubetriebenen Werkzeugmaschine besteht, wobei eine Energieversorgungsvorrichtung in dem Sinne austauschbar ist, dass sie in beiden Geräten verwendet werden kann. Mit noch anderen Worten kann die Rüttelplatte und die Werkzeugmaschine mit demselben Typ Energieversorgungsvorrichtung mit elektrischer Energie versorgt werden. Bei diesem Typ Energieversorgungsvorrichtung handelt es sich vorzugsweise um eine solche Batterie, wie sie üblicherweise im Bereich der Baustellen-Werkzeugmaschinen verwendet wird. Unter dem Begriff «Baustellen-Werkzeugmaschinen» werden im Sinne der Erfindung bevorzugt Kernbohrgeräte, Meißelhämmer, Bohrhämmer, Trenn- oder Winkelschleifer oder Akku-Schrauber verstanden, ohne darauf beschränkt zu sein. Insbesondere die Verwendung von Akkus, die auch in Bohrhämmern oder Akkuschraubern verwendet werden, hat sich als besonders gut geeignet zur Verwendung in der vorgeschlagenen Rüttelplatte erwiesen. Solche Baustellen-Werkzeugmaschinen können, wenn es sich um akkubetriebene Geräte handelt, mit mindestens eine Energieversorgungsvorrichtung verbunden werden, um elektrische Energie zu erhalten. Vorzugsweise sind die Batterien für den Einsatz in sowohl der vorgeschlagenen Rüttelplatte, als auch in einer Baustellen-Werkzeugmaschine geeignet. Es besteht somit eine Kompatibilität der Energieversorgungsvorrichtung für eine Vielzahl von Geräten, die auf einer Baustelle verwendet werden können.

Im Kontext des vorgeschlagenen Systems kann mindestens eine Rüttelplatte und mindestens eine Werkzeugmaschine mit ein und derselben Energieversorgungsvorrichtung bzw. ein und demselben Batterietyp betrieben werden. Dabei bedeutet die Formulierung «ein und derselbe Typ» im Sinne der Erfindung bevorzugt, dass die Batterien eines Typs in einem Merkmal gleich oder identisch ausgebildet sind oder gleiche oder identische Eigenschaften aufweisen. Beispielsweise können Batterien des gleichen Typs eine identische Schnittstelle aufweisen, so dass sie zusammen mit Geräten, die die gleiche Gegenstruktur für diese Schnittstelle aufweisen, verbunden werden können. Darüber hinaus können Batterien des gleichen Typs gleiche oder identische mechanische Eigenschaften, wie Volumen, Länge, Breite oder Höhe aufweise, ohne darauf beschränkt zu sein. Es kann im Sinne der Erfindung auch bevorzugt sein, dass Batterien des gleichen Typs gleiche oder identisch elektrische Eigenschaften aufweisen. Beispielsweise können die Batterien des gleichen Typs in mindestens einer der folgenden Eigenschaften übereinstimmen: Kapazität, Ladungsmenge, Strom oder Spannung, ohne darauf beschränkt zu sein. Die Energieversorgungsvorrichtungen, die zur Versorgung von Baustellen-Werkzeugmaschinen bzw. in dem vorgeschlagenen System zum Einsatz kommen, können beispielsweise eine Kapazität von kleiner als 300 Watt-Stunden (Wh) aufweisen.

In einem zweiten Aspekt betrifft die Erfindung ein Verfahren zum Betrieb eine vorgeschlagenen Rüttelplatte. Die für die Rüttelplatte eingeführten Begriffe, Definitionen und technischen Vorteile gelten vorzugsweise für das Betriebsverfahren für die Rüttelplatte analog. Das Betriebsverfahren dadurch gekennzeichnet, dass die Rüttelplatte einen Elektromotor aufweist, wobei der Elektromotor in einem Drehzahlbereich von mehr als 12.000 Umdrehungen pro Minute betrieben wird.

Es ist im Sinne der Erfindung bevorzugt, dass die Rüttelplatte zur Energieversorgung mit genau zwei Energieversorgungsvorrichtungen verbunden wird, um mit elektrischer Energie versorgt zu werden. Vorzugsweise können die Energieversorgungsvorrichtungen auch in mindestens einer Werkzeugmaschine verwendet werden. Ein wesentlicher Vorteil der Erfindung besteht darin, dass eine akkubetriebene Bodenverdichtungsvorrichtung oder Rüttelplatte bereitgestellt werden kann, die mit handelsüblichen Baustellen-Akkus betrieben werden kann, die häufig auf Baustellen bereits vorhanden sind. Dadurch kann die Energieversorgung verschiedener Geräte, die auf einer Baustelle verwendet werden, erheblich vereinfacht und effizienter gestaltet werden. Insbesondere kann die Anzahl unterschiedlicher Typen von Batterien oder Energieversorgungsvorrichtungen zum Einsatz kommen, reduziert werden. Dadurch müssen auch weniger unterschiedliche Ladegeräte vorgehalten werden, und Energieversorgungsvorrichtungen und Batterien können zwischen unterschiedlichen Geräten ausgetauscht werden. Wenn beispielsweise ein Akku-Schrauber aktuell nicht genutzt wird, kann die Batterie des Akku-Schraubers in einer Rüttelplatte eingesetzt werden, um den Boden zu glätten, oder umgekehrt. Ein solcher leichter Austausch war mit konventionellen Bodenverdichtungsvorrichtungen und Rüttelplatten, wie sie aus dem Stand der Technik bekannt waren, nicht möglich, da die konventionellen Bodenverdichtungsvorrichtungen und Rüttelplatten häufig mit speziellen Hochleistungs-Batterien mit hohen Leistungen und/oder Kapazitäten betrieben werden mussten. In Abwendung von diesem Stand der Technik kann die im Kontext der vorliegenden Erfindung vorgeschlagene Rüttelplatte mit herkömmlichen Baustellen- oder Werkzeugmaschinen-Batterien betrieben werden, für die die Infrastruktur auf einer Baustellen üblicherweise bereits vorhanden ist. Weder müssen also zusätzliche Kabel auf der Baustelle verlegt, noch müssen spezielle Ladegeräte für die Energieversorgungsvorrichtungen der vorgeschlagenen Rüttelplatte vorgehalten werden.

In einem weiteren Aspekt betrifft die Erfindung ein System, das eine vorgeschlagene, akkubetriebene Rüttelplatte und eine akkubetriebene Werkzeugmaschine umfasst. Die Rüttelplatte wird zur Energieversorgung mit mindestens einer Energieversorgungsvorrichtung verbunden, wobei die mindestens eine Energieversorgungsvorrichtung auch in der Werkzeugmaschine verwendbar ist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung der vorgeschlagenen Rüttelplatte, wobei die Rüttelplatte zur Energieversorgung mit einer Energieversorgungsvorrichtung verbunden ist
- Fig. 2: Ansicht einer bevorzugten Ausgestaltung der vorgeschlagenen Rüttelplatte, wobei die Rüttelplatte zur Energieversorgung mit zwei Energieversorgungsvorrichtungen verbunden ist
- Fig. 3: Ansicht einer bevorzugten Ausgestaltung der vorgeschlagenen Rüttelplatte mit einer horizontalen Anordnung der Komponenten der Antriebseinheit

### Ausführungsbeispiele und Figurenbeschreibung:

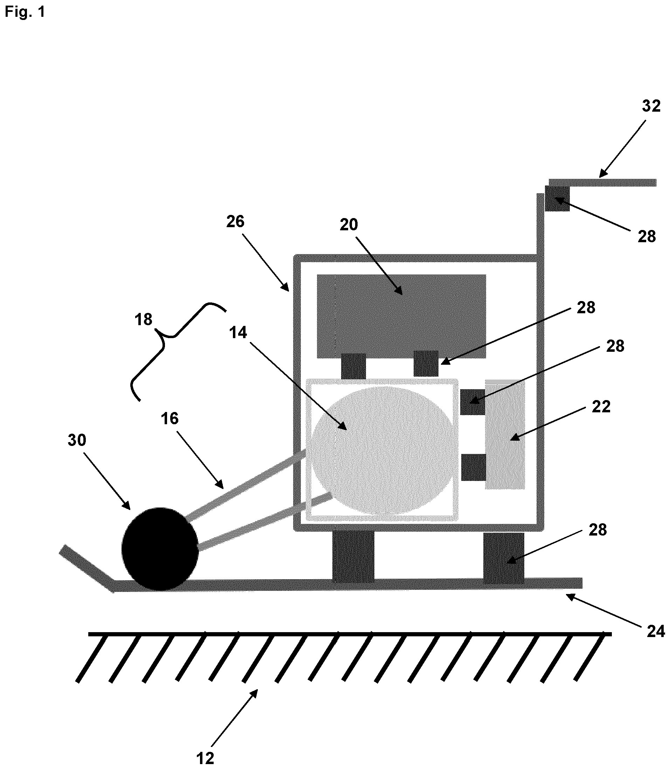

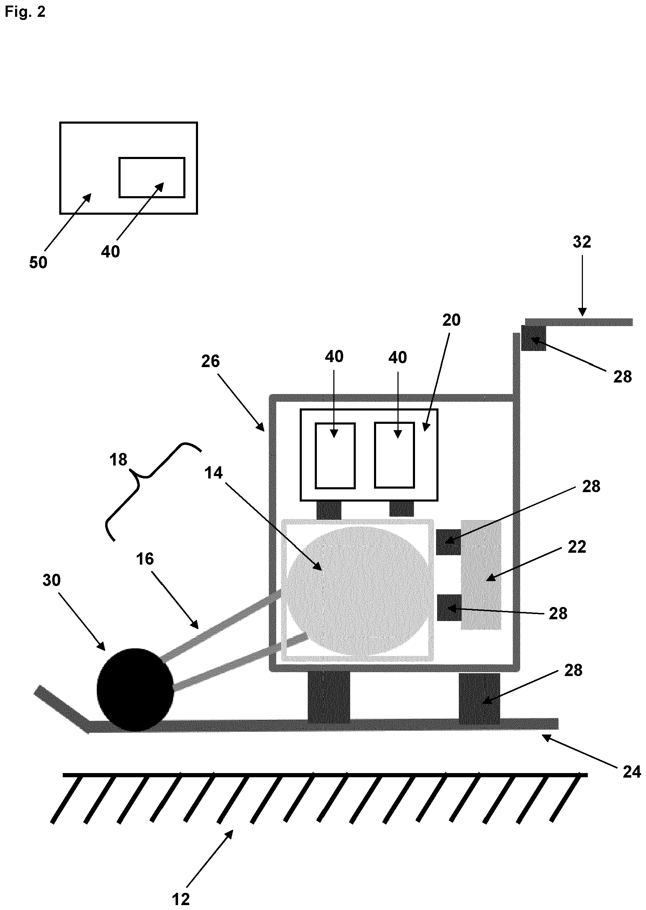

Figur 1 zeigt eine bevorzugte Ausführungsform der vorgeschlagenen Rüttelplatte 10. Die Rüttelplatte 10 kann auf einen Untergrund 12 aufgesetzt werden, der von einer Bodenplatte 24 der Rüttelplatte 10 geglättet werden soll. Die Bodenplatte 24 der Rüttelplatte 10 kann zu Schwingungen angeregt werden, mit denen der Untergrund 12 verdichtet werden kann. Die Schwingungen oder Vibrationsbewegungen werden von einem Elektromotor 14 erzeugt und mit Hilfe einer Getriebevorrichtung 16 auf die Bodenplatte 24 übertragen. Bei der Getriebevorrichtung 16 kann es sich beispielsweise um ein Stirnradgetriebe handeln. Die Getriebevorrichtung 16 und der Elektromotor 14 bilden zusammen den Antriebsstrang 18 der Rüttelplatte 10. Die Bewegung des Elektromotors 14 kann vorzugsweise auf eine Welle (nicht dargestellt) übertragen werden, die die Bewegung ihrerseits auf die Bodenplatte 24 überträgt. Die Welle kann eine exzentrische Masse 30 umfassen oder mit einer exzentrischen Masse 30 verbunden vorliegen. Die Rüttelplatte 10 kann mit mindestens einer Energieversorgungseinheit 20 verbunden vorliegen, um von der Energieversorgungsvorrichtung 20 elektrische Energie zu erhalten. Bei dem in Fig. 1 dargestellten Ausführungsbeispiel der Erfindung weist die Rüttelplatte 10 eine Energieversorgungsvorrichtung 20 im Sinne eines Einzelakkumulators 40 auf, während die in Fig. 2 dargestellte Rüttelplatte 10 zwei Einzelakkumulatoren 40 aufweist, die zusammen die Energieversorgungseinheit 20 bilden. Die Energieversorgungsvorrichtung 20, der Elektromotor 14 und eine Steuer-Elektronik 22 bilden zusammen eine Antriebseinheit 26 der Rüttelplatte 10, die als Vorteil der Erfindung besonders handlich und kompakt ausgebildet sein kann. Dadurch kann mit der Erfindung eine Rüttelplatte 10 mit besonders kleinem Transportmaß bereitgestellt werden.

Zwischen einer Reihe von Komponenten der Rüttelplatte 10 können Dämpfungselemente 28 vorgesehen sein. Beispielsweise können zwischen der Bodenplatte 24 und der Antriebseinheit 26 Dämpfungselemente 28 vorgesehen sein. Darüber hinaus können Dämpfungselemente 28 zwischen der mindestens einen Energieversorgungseinheit 20 und/oder der Steuer-Elektronik 22 vorgesehen sein. Die Antriebseinheit 26 kann mit einem Griff oder einem Schubbügel 32 verbunden sein, mit denen die Rüttelplatte 10 gehalten bzw. bewegt werden kann. Auch zwischen der Antriebseinheit 26 auf der einen Seite und dem Griff bzw. dem Schubbügel 32 auf der anderen Seite können Dämpfungselemente 28 vorgesehen sein. Durch diese Dämpfungselemente 28 wird beispielsweise verhindert, dass die Schwingungen bzw. Vibrationen der Rüttelplatte 10 bzw. ihrer Bodenplatte 24 auf den Nutzer bzw. seine Hände und Gelenke übertragen werden. Eine andere Funktion der Dämpfungselemente 28 kann darin bestehen, einzelne empfindliche Elemente der Rüttelplatte 10, wie beispielsweise die Steuer-Elektronik 22, vor den Schwingungen und etwaigen Beschädigungen zu schützen.

Figur 2 zeigt eine bevorzugte Ausführungsform der vorgeschlagenen Rüttelplatte 10, die mit zwei Energieversorgungsvorrichtungen 40 verbunden vorliegt, um mit elektrischer Energie versorgt zu werden. Die zwei Energieversorgungsvorrichtungen 40 bilden die Energieversorgungseinheit 20 der Rüttelplatte 10. Schematisch ist in Fig. 2 auch eine Werkzeugmaschine 50 dargestellt, die mit einer Energieversorgungsvorrichtung 40 desselben Typs verbunden vorliegt, um elektrische Energie zu erhalten. Damit soll das vorgeschlagene System dargestellt werden, das eine akkubetriebene Werkzeugmaschine 50 und eine akkubetriebene Rüttelplatte 10 umfasst, wobei beide Systemkomponenten - Rüttelplatte 10 und Werkzeugmaschine 50 - mit Energieversorgungsvorrichtungen 40 desselben Typs mit elektrischer Energie versorgt werden können sollen. Auf diese Weise können Batterien 40 zwischen den Systemkomponenten 10, 50 ausgetauscht werden und die Energieversorgung von Geräten 10, 50 auf einer Baustelle erheblich vereinfacht werden. Dies insbesondere auch dadurch, dass eine einheitliche Lade-Infrastruktur auf der Baustelle verwendet werden kann. Während die in Figur 2 dargestellte Rüttelplatte 10 beispielsweise von zwei Energieversorgungsvorrichtungen 40 mit elektrischer Energie versorgt wird, liegt die in Figur 2 schematisch dargestellte Werkzeugmaschine 50 mit einer Energieversorgungsvorrichtung 40 verbunden vor. Selbstverständlich kann diese Aufteilung auch umgekehrt sein, so dass die Rüttelplatte 10 eine Energieversorgungsvorrichtung 40 aufweist, während die Werkzeugmaschine 50 mit zwei Energieversorgungsvorrichtungen 40 zum Zwecke der Energieversorgung verbunden vorliegt. Auch viele andere Lösungen sind vorstellbar.

Figur 3 zeigt eine schematische Seitenansicht einer möglichen Ausgestaltung der vorgeschlagenen Rüttelplatte 10 mit einer horizontalen Anordnung der Komponenten 14, 20, 22 der Antriebseinheit 26. Wie aus Figur 3 hervorgeht, ist der Motor 14 der Rüttelplatte 10 in einem vorderen Bereich der Antriebseinheit 26 angeordnet, während die Steuer-Elektronik 22 und die Energieversorgungseinheit 20 eine Einheit (ohne Bezugszeichen) bilden, die hinter dem Elektromotor 14 angeordnet vorliegt. In dem in Figur 3 dargestellten Ausführungsbeispiel der Erfindung ist die Steuer-Elektronik 22 auf einer Oberseite einen dargestellten Energieversorgungseinrichtung 20 angeordnet. Dadurch sind der Motor 14 und die mindestens eine Energieversorgungseinrichtung 20 als «schwere» Komponenten der Antriebseinheit 26 der Rüttelplatte 10 in einem unteren Bereich der Antriebseinheit 26 angeordnet. Auf diese Weise ist der Schwerpunkt der Rüttelplatte 10 besonders tief, d.h. besonders nahe am Untergrund 12 angeordnet, wodurch die Handhabung der Rüttelplatte 10 erleichtert und das Kompaktierungsergebnis verbessert werden kann.

In Figur 3 wird auch ein Rahmen 36 der Rüttelplatte 10 dargestellt, sowie ein Motorgehäuse 34, wobei das Motorgehäuse 34 den Elektromotor 14 der Rüttelplatte 10 umgibt. Vorzugsweise kann auch die Antriebseinheit 26 ein Gehäuse (ohne Bezugszeichen) aufweisen, das einen räumlichen Abschluss der Antriebseinheit 26 gegenüber der Umgebung bildet. Darüber hinaus zeigt Figur 3 die Raumrichtungen O: nach oben, U: nach unten, H: nach hinten und V: nach vorne. Beispielsweise ist der Motor 14 in der Antriebseinheit 26 vor der Einheit aus Steuer-Elektronik 22 und Energieversorgungseinheit 20 angeordnet, während beispielsweise die Energieversorgungseinheit 20 unterhalb der Steuer-Elektronik 22 angeordnet vorliegt. Obwohl die in Figur 3 dargestellte Rüttelplatte 10 nur eine Energieversorgungseinheit 20 zeigt, kann die Rüttelplatte 10 vorzugsweise zwei oder mehr Energieversorgungsvorrichtungen 40 im Sinne von Einzelakkumulatoren aufweisen. Es ist im Sinne der Erfindung ganz besonders bevorzugt, dass die Rüttelplatte 10 zwei Einzelakkumulatoren 40 aufweist, wobei die zwei Einzelakkus 40 die Energieversorgungseinheit 20 der Rüttelplatte 10 bilden. Die Einzelakkumulatoren 40 können nebeneinander oder übereinander in der Antriebseinheit 26 angeordnet vorliegen. Die Einzelackumulatoren 40 können beispielsweise von hinten, von oben oder von einer Seite in die Antriebseinheit 26 der Rüttelplatte 10 eingeschoben werden, um die Rüttelplatte 10 mit elektrischer Energie zu versorgen.

### Bezugszeichenliste

- 10: Rüttelplatte
- 12: Boden, Erde, Untergrund
- 14: Elektromotor
- 16: Getriebevorrichtung, beispielweise Stirnradgetriebe
- 18: Leistungsstrang
- 20: Energieversorgungseinheit
- 22: Steuer-Elektronik
- 24: Bodenplatte
- 26: Antriebseinheit
- 28: Dämpfungselemente
- 30: exzentrische Masse
- 32: Griff oder Schubbügel
- 34: Motorgehäuse
- 36: Rahmen
- 40: Einzelakkumulator
- 50: Werkzeugmaschine
- O: Raumrichtung «nach oben»
- U: Raumrichtung «nach unten»
- V: Raumrichtung «nach vorne»
- H: Raumrichtung «nach hinten»

## Patentansprüche

1. Rüttelplatte (10) zum Verdichten von Erde, Boden oder Untergrund (12), beispielsweise auf einer Baustelle,
**dadurch gekennzeichnet, dass**
die Rüttelplatte (10) einen Elektromotor (14) aufweist, wobei der Elektromotor (14) in einem Drehzahlbereich von mehr als 12.000 Umdrehungen pro Minute betreibbar ist.

2. Rüttelplatte (10) nach Anspruch 1
**dadurch gekennzeichnet, dass**
die Rüttelplatte (10) eine Antriebseinheit (26) aufweist, wobei die Antriebseinheit (26) den Elektromotor (14) und eine Steuer-Elektronik (22) umfasst und zur Versorgung mit elektrischer Energie mit einer Energieversorgungseinheit (20) verbindbar ist, wobei die Steuer-Elektronik (22) und/oder die Energieversorgungseinheit (20) innerhalb der Antriebseinheit (26) hinter dem Elektromotor (14) angeordnet vorliegen.

3. Rüttelplatte (10) nach Anspruch 1 oder 2
**dadurch gekennzeichnet, dass**
der Elektromotor (14) ein bürstenloser Gleichstrom-Motor ist.

4. Rüttelplatte (10) nach einem der vorhergehenden Ansprüche
**dadurch gekennzeichnet, dass**
die Rüttelplatte (10) ein Stirnradgetriebe (16) aufweist, wobei das Stirnradgetriebe (16) in einem Leistungsstrang (18) der Rüttelplatte auf den Elektromotor (14) folgend vorgesehen ist.

5. Rüttelplatte (10) nach Anspruch 4
**dadurch gekennzeichnet, dass**
das Stirnradgetriebe (16) einstufig ausgebildet ist.

6. Rüttelplatte (10) nach Anspruch 4 oder 5
**dadurch gekennzeichnet, dass**
das Stirnradgetriebe (16) eine Übersetzung in einem Bereich zwischen 2,5 und 6 aufweist.

7. Rüttelplatte (10) nach einem der vorhergehenden Ansprüche
**dadurch gekennzeichnet, dass**
die Rüttelplatte (10) zur Energieversorgung mit mindestens einer Energieversorgungsvorrichtung (40) verbindbar ist.

8. Rüttelplatte (10) nach Anspruch 7
**dadurch gekennzeichnet, dass**
die Rüttelplatte (10) zur Energieversorgung mit zwei Energieversorgungsvorrichtungen (40) verbindbar ist.

9. Rüttelplatte (10) nach Anspruch 7 oder 8
**dadurch gekennzeichnet, dass**
die Energieversorgungsvorrichtungen (40) in Reihe geschaltet sind.

10. Rüttelplatte (10) nach einem der Ansprüche 7 bis 9
**dadurch gekennzeichnet, dass**
die mindestens eine Energieversorgungsvorrichtung (40) auch in mindestens einer Werkzeugmaschine (50) verwendbar sind.

11. Rüttelplatte (10) nach einem der Ansprüche 7 bis 10
**dadurch gekennzeichnet, dass**
die mindestens eine Energieversorgungsvorrichtung (40) eine Kapazität von kleiner als 300 Watt-Stunden (Wh) aufweist.

12. Verfahren zum Betrieb einer Rüttelplatte (10) nach einem der vorhergehenden Ansprüche **dadurch gekennzeichnet, dass**
die Rüttelplatte (10) einen Elektromotor (14) aufweist, wobei der Elektromotor (14) in einem Drehzahlbereich von mehr als 12.000 Umdrehungen pro Minute betrieben wird.

13. Verfahren nach Anspruch 12
**dadurch gekennzeichnet, dass**
die Rüttelplatte (10) zur Energieversorgung mit zwei Energieversorgungsvorrichtungen (40) verbunden wird.

14. System umfassend eine Rüttelplatte (10) nach einem der Ansprüche 1 bis 11, sowie eine akkubetriebene Werkzeugmaschine (50)
**dadurch gekennzeichnet, dass**
die Rüttelplatte (10) zur Energieversorgung mit mindestens einer Energieversorgungsvorrichtung (40) verbunden wird, wobei die mindestens eine Energieversorgungsvorrichtung (40) auch in der Werkzeugmaschine (50) verwendbar ist.

15. System nach Anspruch 14
**dadurch gekennzeichnet, dass**
die mindestens eine Energieversorgungsvorrichtung (40) eine Kapazität von kleiner als 300 Watt-Stunden (Wh) aufweist.
